# EUROPÄISCHE PATENTSCHRIFT

(11) **EP 1 256 168 B1**
(45) Veröffentlichungstag und Bekanntmachung des Hinweises auf die Patenterteilung: **10.03.2004**
(21) Anmeldenummer: 00987400.9
(22) Anmeldetag: 14.12.2000
(51) Int. Cl.: H03K 3/00

(54) **SYSTEMTRÄGER FÜR FREI PROGRAMMIERBARE BAUSTEINE**
SYSTEM CARRIER FOR FREELY PROGRAMMABLE BLOCKS
SUPPORT SYSTEME POUR CIRCUITS A PROGRAMMATION LIBRE

(30) Priorität: 18.02.2000 DE 20003010 U
(43) Veröffentlichungstag der Anmeldung: 13.11.2002
(73) Patentinhaber: IsarTec GmbH, 84036 Landshut (DE)
(72) Erfinder: Gesch, Helmuth, 84184 Tiefenbach (DE); Waidelich, Markus, 80639 München (DE)
(74) Vertreter: Gustorf, Gerhard, Dipl.-Ing.
(86) Internationale Anmeldenummer: PCT/EP2000/012712
(87) Internationale Veröffentlichungsnummer: WO 2001/061852

(56) Entgegenhaltungen:
- EP-A- 0 227 028
- US-A- 5 424 589
- US-A- 5 703 759
- US-A- 5 935 232

## Beschreibung

Die Erfindung betrifft einen Systemträger für frei programmierbare, durch Busse miteinander verbundene Bausteine (Gate Arrays).

Bei der Entwicklung komplexer integrierter Schaltungen (IC) werden zunächst Logikentwürfe erstellt, die auf einer sprachlichen Beschreibung in einer Programmiersprache beruhen, der sogenannten Hardware Description Language (HDL). Zur funktionalen Verifikation hoch integrierter mikroelektronischer Schaltkreise ist es üblich, in der Entwicklungsphase eine Logiksimulation einzusetzen. Ergänzend zur Simulation wurden in den letzten Jahren spezielle Plattformen für die Logik-Emulation eingesetzt. Die als Netzliste vorliegende und zu verifizierende Schaltung wurde auf frei programmierbare Logikbausteine (FPGA) partitioniert, die durch spezielle, programmierbare Schaltmatrizen verbunden sind. Diese Technik ist als Rapid Prototyping bekannt. Der Entwickler wird damit in die Lage versetzt, in einer frühen Entwicklungsphase eines Logikentwurfes die Schaltung auf der Plattform zu testen, bevor diese in Silizium gegossen wird.

Der Nachteil dieses Systems besteht darin, daß aufgrund der Schaltmatrix erhebliche Laufzeitverzögerungen in Kauf genommen werden müssen, was die Verifikation des Logikdesigns erschwert oder gar unmöglich macht. Hinzu kommt, daß die programmierbaren Bausteine auf der Plattform fest platziert und durch ebenfalls feste Verbindungen über die Schaltmatrix miteinander verbunden sind (siehe z.B.: US-5 424 589 A).

Der Erfindung liegt die Aufgabe zugrunde, einen universell verwendbaren Systemträger zur Verfügung zu stellen, der ohne Schaltmatrix auskommt, so daß sehr kurze und stets fest vorbestimmbare Signallaufzeiten erreicht werden und das System in Echtzeit verifiziert werden kann.

Bei einem Systemträger der eingangs umrissenen Gattung wird diese Aufgabe erfindungsgemäß dadurch gelöst, daß auf dem Systemträger mindestens drei identisch konfigurierte Steckplätze für die Aufnahme von jeweils einem Modul mit frei programmierbarem Baustein (Gate-Array) angeordnet sind, das in seiner Position veränderbar mit dem Steckplatz koppelbar ist, wobei die Steckplätze über drei Gruppen von Bussen fest untereinander verbunden sind.

Damit wird der wesentliche Vorteil erzielt, daß der Systemträger, der zunächst als nicht konfiguriertes Board vorliegt, lediglich ein dezidiertes Bus-System enthält. Erst nach der Bestückung mit den Modulen, die frei programmierbare Bausteine enthalten und eine übereinstimmende Architektur haben, erhält das System-Board durch Programmierung seine logische Funktion und ist sofort einsatzfähig. Mit Hilfe der individuell konfigurierbaren Bausteine, die in ihrer Position veränderbar platziert werden können, ist es möglich, rasch eine auf die Anwendungszwecke abgestimmte, optimale Verbindung über das Bus-System herzustellen, das einen unterschiedlichen Zugriff auf die elektronischen Möglichkeiten des Boards erlaubt. Durch den modularen Aufbau des Systems ergibt sich der weitere Vorteil, daß immer auf vorhandene FPGA-Bausteine unterschiedlicher Größe zurückgegriffen und die neueste technologische Generation von FPGA-Bausteinen eingesetzt werden kann.

In jedem Modul ist der frei programmierbare Baustein fest mit einer Platine verbunden, von deren Unterseite Steckstifte (Pins) abstehen, die in entsprechende Aufnahmesitze der Steckplätze eingesteckt werden können. Die Konfiguration der Steckstifte und der Aufnahmesitze ist hierbei symmetrisch.

Wenn die Konfiguration der Steckstifte und der Aufnahmesitze punktsymmetrisch ist, kann jedes Modul durch Drehen um 180° in zwei unterschiedlichen Positionen mit dem Steckplatz gekoppelt werden. Daneben ist es auch denkbar, unterschiedliche Positionen der Module durch Längsverschiebung auf dem Steckplatz zu erzeugen.

Jeder der Bus-Gruppen hat unterschiedliche Aufgaben und ggf. auch Datenübertragungskapazitäten. Bei einer ersten Gruppe der Busse (private Busse) verbindet jeder Bus jeweils zwei Steckplätze direkt miteinander. Mittels der zweiten Gruppe der Busse (lokale Busse) werden alle Steckplätze untereinander verbunden. Die dritte Gruppe der Busse (globale Busse) verbindet alle Steckplätze untereinander und stellt zusätzlich eine Verkettung mit einem weiteren Systemträger her. Die Architektur des Systemträgers erlaubt es somit, mehrere Systemträger zur Erweiterung der Kapazität parallel zu schalten.

Einige der Busse können zusätzlich mit einem Speicher verbunden sein.

Die Erfindung ist nachstehend an einem Ausführungsbeispiel erläutert, das in der Zeichnung dargestellt ist. Es zeigen:
Figur 1 die schematische Ansicht von zwei Systemträgern (Boards) gemäß der Erfindung mit jeweils einem dezidierten Bus-System,
Figur 2 die schematische Ansicht eines herkömmlichen Boards, bei dem die Bausteine über feste Verdrahtungen mit einer gemeinsamen Schaltmatrix verbunden sind,
Figur 3 eine schematische Ansicht eines Systemträgers nach dem Beispiel der Figur 1,
Figur 4 die Schnittdarstellung eines Teils des Systemträgers mit Steckplatz, auf den ein Modul aufgesteckt wird,
Figur 5 die Draufsicht des Moduls der Figur 4,
Figur 6 die Unteransicht des Moduls,
Figur 7 die Draufsicht eines Systemträgers (Board) mit möglichem Layout und ohne elektrische Verdrahtung,
Figur 8 einen Ausschnitt aus dem Board der Figur 7 mit Bus-System und möglicher Belegung mit Modulen bei maximaler Auslastung aller Busse,
Figur 9 eine Variante der Figur 8 bei Teilauslastung der Busse und
Figur 10 eine der Figur 9 entsprechende Ansicht bei unterschiedlicher Positionierung der Module.

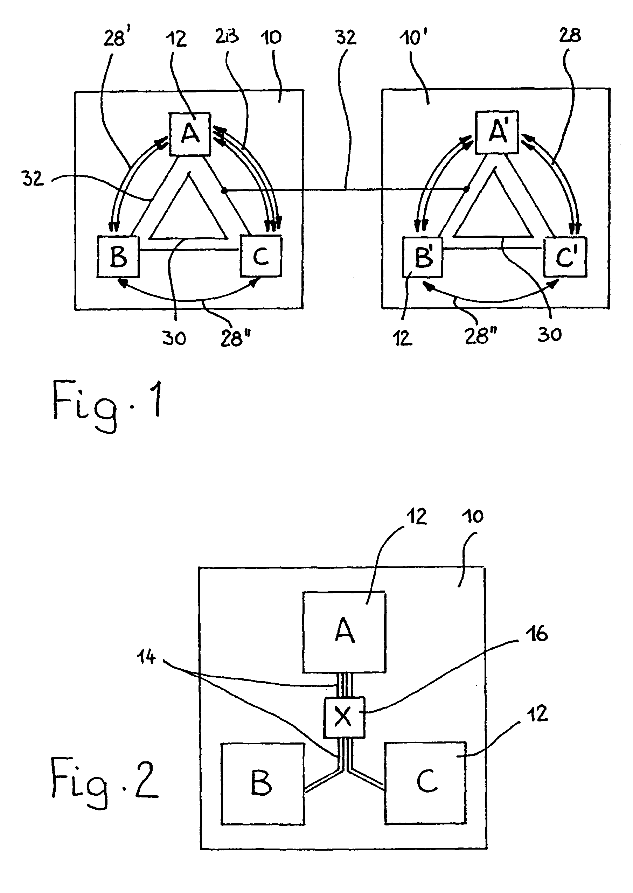

Figur 2 zeigt den bereits erläuterten Stand der Technik mit einem Systemträger (Board 10), auf dem insgesamt drei programmierte Bausteine A, B, C fest platziert sind. Die Bausteine (Module 12) sind über ebenfalls fixe Verbindungsleitungen 14 (Busse) untereinander und mit einer Schaltmatrix 16 verbunden. Wie bereits erwähnt, ist ein derartiges System nicht flexibel, wodurch Herstellung und Anwendung für Emulationszwecke teuer und zeitaufwendig sind. Von erheblichen Nachteil ist ferner, daß die Schaltmatrix 16 nicht voraussagbare Laufzeitverzögerungen verursacht, so daß keine Echtzeitfähigkeit erreicht wird.

In Figur 1 sind zwei erfindungsgemäß ausgebildete Systemträger (Boards 10, 10') schematisch dargestellt, von denen jeder ebenfalls drei Module 12 mit frei programmierbaren FPGA-Bausteinen A, B, C trägt, die jedoch nicht fest auf dem Board 10 sitzen, sondern ausgewechselt und zusätzlich in ihrer Position verändert werden können.

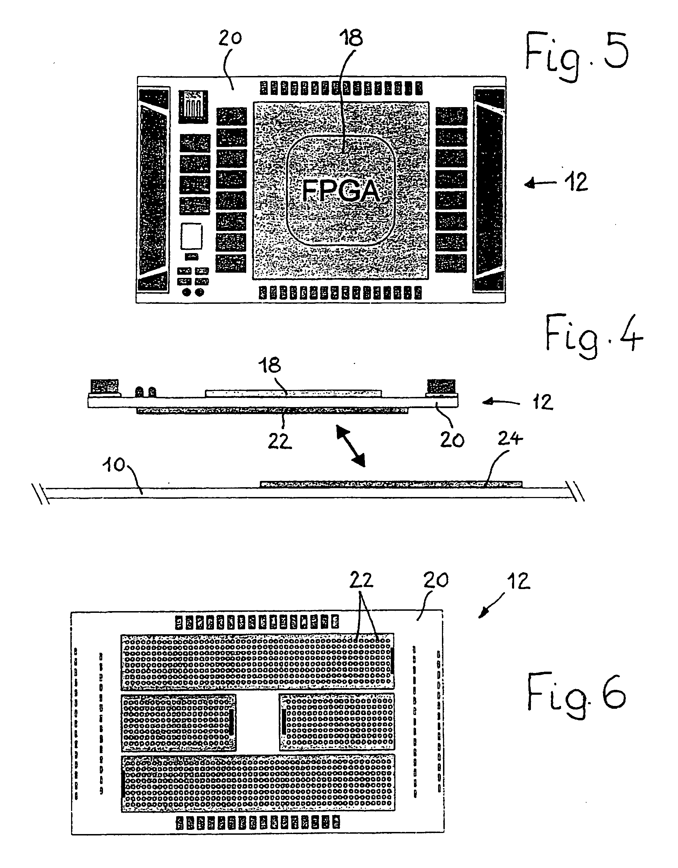

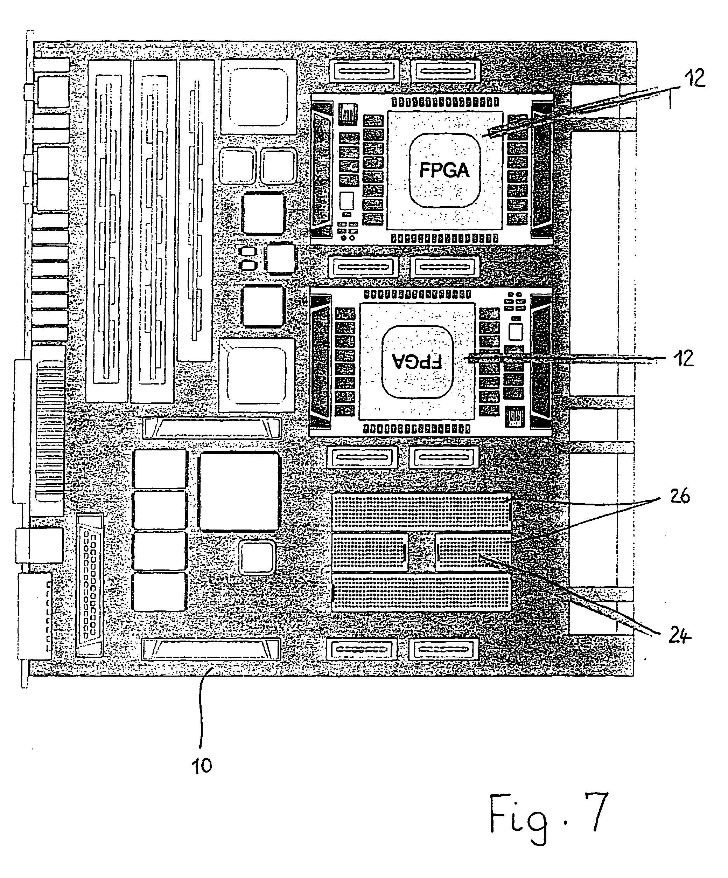

In den Figuren 4 bis 6 ist schematisch angedeutet, daß jedes Modul 12 einen frei programmierbaren Gate-Array-Baustein (FPGA) 18 enthält, der fest auf einer Platine 20 angebracht ist. Von der Unterseite des Platine 20 stehen Steckstifte 22 (Pins) ab, die in entsprechende Aufnahmesitze 26 von Steckplätzen 24 eingesteckt werden können, die auf dem Systemträger (Board 10) vorgesehen sind (vgl. auch Figur 7).

Figur 7 zeigt die Draufsicht einer möglichen Ausführungsform für den Systemträger 10 ohne elektrische Verdrahtung mit drei Steckplätzen 24, wobei im unteren Teil der Figur 7 der Steckplatz 24 mit seinen Aufnahmesitzen 26 zu erkennen ist, während die beiden anderen Steckplätze mit jeweils einem Modul 12 belegt sind. Ein Vergleich der Figuren 6 und 7 läßt erkennen, daß die Konfiguration der Steckstifte 22 auf der Unterseite des Moduls 12 und der Aufnahmesitze 26 des Steckplatzes 24 einander entsprechen, wobei eine Symmetrie sowohl hinsichtlich der beiden Achsen als auch des Zentrums zu erkennen ist. Daraus ergibt sich die äußerst vorteilhafte Möglichkeit, jedes Modul 12 in wenigstens zwei unterschiedlichen Positionen auf dem Steckplatz 24 anzubringen. Bei Punktsymmetrie lassen sich durch Drehen der Module 12 um 180° zwei unterschiedliche Positionen auf dem Steckplatz 22 herstellen, worauf weiter unten noch näher eingegangen wird. Daneben ist es auch denkbar, bei entsprechender Konfiguration der Steckplätze 24 und der Steckstifte 22 unterschiedliche Positionierungen durch Verschieben der Module 12 relativ zum Steckplatz 24 zu erreichen.

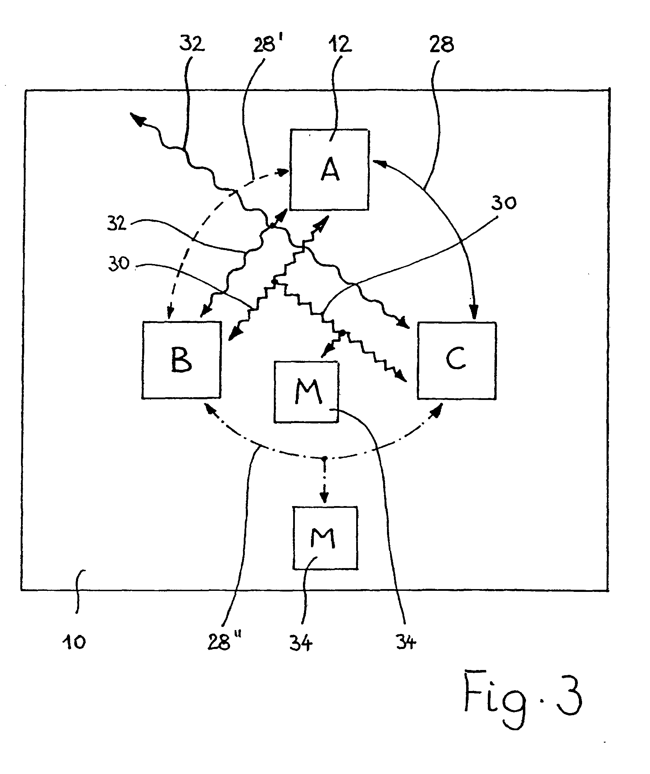

Für die universelle Einsatzfähigkeit des Systemträgers 10 ist ferner wesentlich, das dieser mit einem dezidierten Bus-System ausgestattet ist. In Figur 1 ist angedeutet, daß alle drei für die Module 12 vorgesehenen Steckplätze 24 auf dem Board 10 durch ringförmig dargestellte, private Busse 28 paarweise miteinander verbunden sind. Die privaten Busse 28 können unterschiedliche Kapazitäten und Aufgaben haben, was in Figur 3 durch den als durchgehende Linie dargestellten Bus 28, den gestrichelt wiedergegebenen Bus 28' und den strichpunktiert angedeuteten Bus 28'' symbolisiert ist.

Eine zweite Gruppe der Busse wird durch die sogenannten lokalen Busse 30 gebildet, die alle Steckplätze 22 auf dem Board 10 untereinander verbinden. Diese lokalen Busse 30 sind in Figur 3 als Zickzacklinien eingezeichnet.

Schließlich wird die dritte Gruppe der Busse durch sogenannte globale Busse 32 gebildet, die in Figur 3 als Wellenlinien symbolisiert sind und die alle Steckplätze 24 untereinander verbinden und zusätzlich eine Verbindung zu einem weiteren Systemträger herstellen, im Beispiel der Figur 1 zum Systemträger 10'. Durch den globalen Bus 32 können somit mehrere Systemträger zusammengeschlossen werden, um das Gesamtsystem zu erweitern.

In Figur 3 ist schließlich angedeutet, daß der private Bus 28'' mit einem Speicher 34 und einer der lokalen Busse 30 mit einem anderen Speicher 34 verbunden sind.

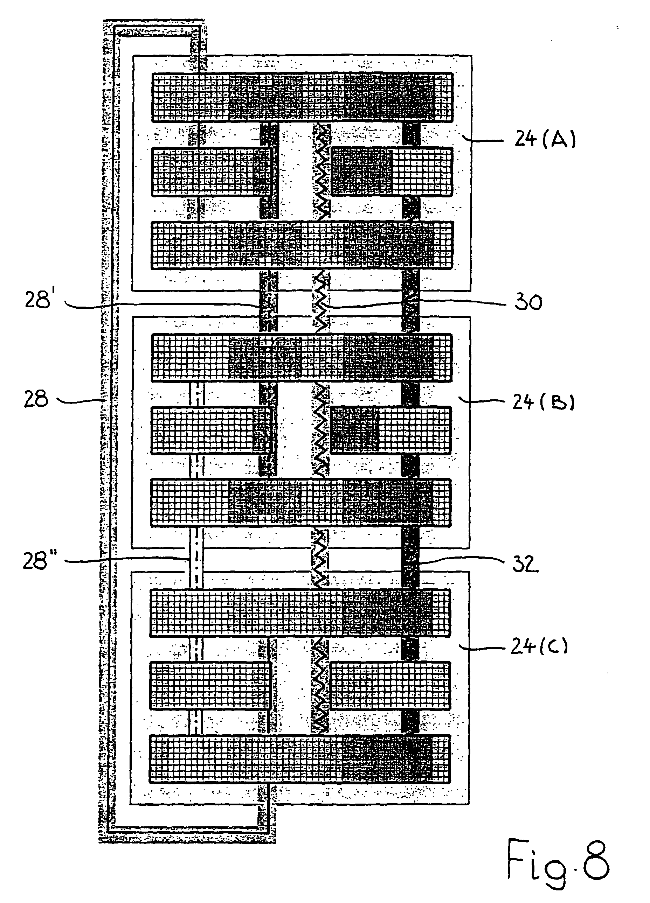

Figur 8 zeigt einen Ausschnitt aus dem rechten Teil der Figur 7 mit den drei Steckplätzen 24, die durch die privaten Busse 28 (durchgezogene Linien), 28' (gestrichelte Linien) und 28'' (strichpunktiert eingezeichnet) miteinander verbunden sind. Die lokalen Busse 30 sind in Übereinstimmung mit Figur 3 als Zickzacklinien und die globalen Busse 32 als Schlangenlinien dargestellt.

Alle drei Steckplätze 24 der Figur 8 sind mit Modulen 12 belegt, deren frei programmierte Bausteine 18 (FPGA) so programmiert sind, daß sich eine Vollauslastung ergibt, was in Figur 8 durch die komplett belegten Pin-Gruppen unterschiedlicher Grautöne angedeutet ist, die den Grautönen der angeschlossenen Busse entsprechen.

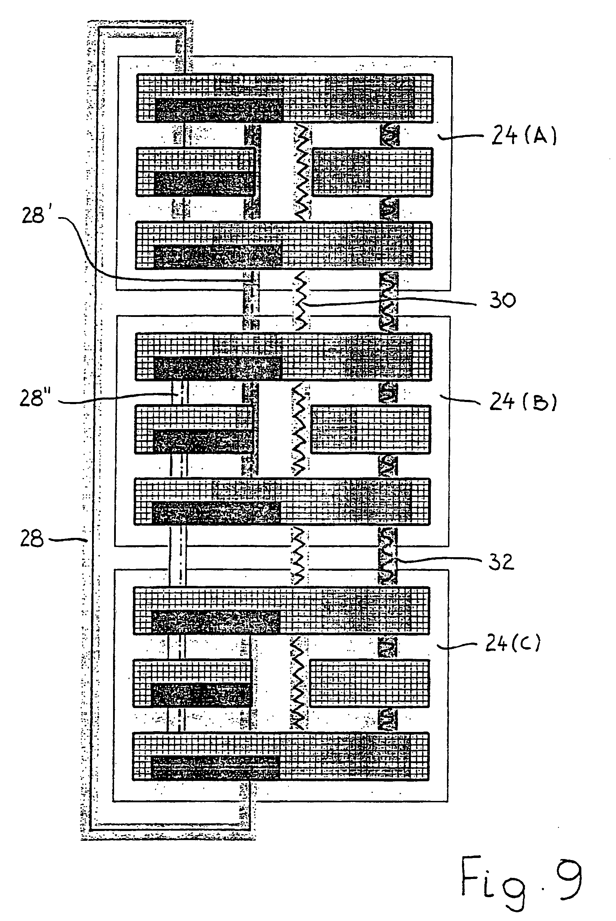

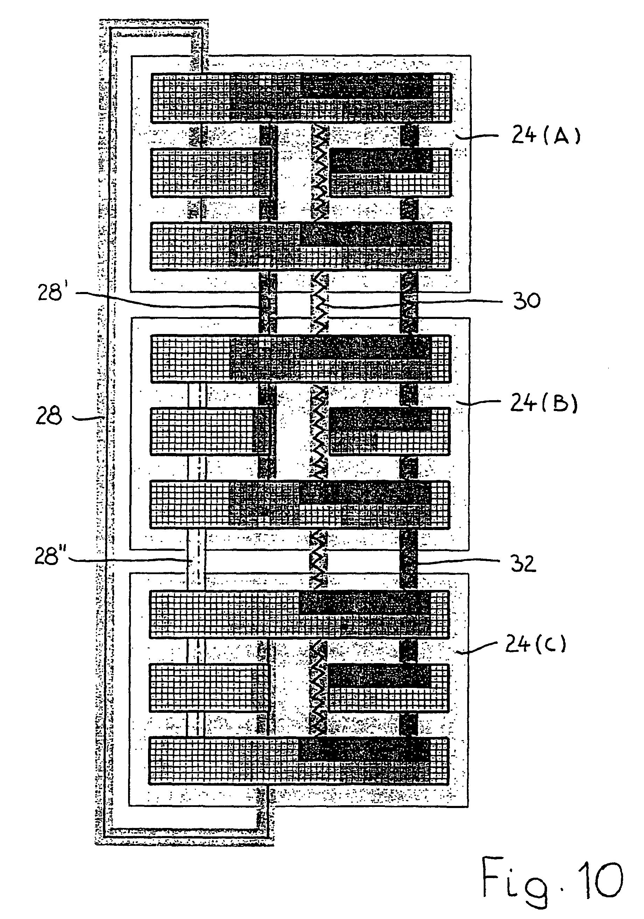

Die Figuren 9 und 10 zeigen ein Anwendungsbeispiel, bei dem sich jeweils keine maximale Auslastung der Busse ergibt, sondern nur unterschiedliche Teilauslastungen. Auch hier sind wieder alle Steckstifte 22 (Pins) der FPGA-Bausteine 18 durch die Busse untereinander verbunden, aber nicht vollständig elektrisch belegt; die nicht belegten Bereiche sind schwarz eingezeichnet. So sind in Figur 9 aufgrund einer Teilbelegung der linken Hälften der Module A, B, C die privaten Busse 28, 28', 28'' nur teilweise ausgelastet, während die lokalen Busse 30 und die globalen Busse 32 vollständig ausgelastet sind (rechte Teile der Steckplätze 24 in Figur 9).

Wenn nun, wie in Figur 10 angedeutet, die Module A, B, C um 180° gedreht werden, sind ihre nur teilweise belegten Bereiche, die vorher im linken Teil lagen, mit den privaten Bussen 28, 28', 28'' verbunden, so daß diese jetzt voll ausgelastet sind.

Daraus ergibt sich, daß durch einfaches Drehen - oder, wie angedeutet, Verschieben - der Module 12 die Kapazität und der unterschiedliche Verwendungszweck der Busse optimal genutzt werden können. Einer der Verwendungszwecke kann beispielsweise der Zugriff auf einen Speicher 34 sein.

Bei der Erfindung besteht die Möglichkeit, das System mit nur einem oder zwei Modulen zu betreiben oder Module zu verwenden, die kleiner als die Steckplätze 24 sind, so daß - wie angedeutet - die unterschiedliche Positionierung statt durch Drehen durch Verschieben hergestellt werden kann.

Die Vorteile der Erfindung sind vor allem darin zu sehen, daß eine weitgehende Echtzeitfähigkeit realisiert wird, so daß viele unterschiedliche Schaltengsentwürfe simuliert und einer später realisierten Halbleiterschaltung in Funktion und zeitlichem Verhalten nachgebildet werden können. Da keine Schaltmatrix zur Verbindung kritischer Signalpfade erforderlich ist, können die sehr kurzen Signallaufzeiten vorhergesagt werden.

Die dezidierte Busstruktur erlaubt eine optimale Signalverbindung der frei programmierbaren Gate-Arrays untereinander. Der modulare Aufbau hat zur Folge, daß die FPGAs frei gewählt werden können und untereinander austauschbar und positionierbar sind, so daß die interne Busstruktur optimal ausgelastet wird.

## Patentansprüche

1. Systemträger für frei programmierbare, durch Busse miteinander verbundene Bausteine, **dadurch gekennzeichnet, daß** auf dem Systemträger (10) mindestens drei identisch konfigurierte Steckplätze (24) für die Aufnahme von jeweils einem Modul (12) mit frei programmierbarem Baustein (18) angeordnet sind, das in seiner Position veränderbar mit dem Steckplatz (24) koppelbar ist, wobei die Steckplätze (24) über drei Gruppen von Bussen (28, 30, 32) fest untereinander verbunden sind.

2. Systemträger nach Anspruch 1, **dadurch gekennzeichnet, daß** jeder frei programmierbare Baustein (FPGA 18) fest mit einer Platine (20) verbunden ist, von deren Unterseite Steckstifte (Pins 22) abstehen, die in entsprechende Aufnahmesitze (26) der Steckplätze (24) einsteckbar sind.

3. Systemträger nach Anspruch 2, **dadurch gekennzeichnet, daß** die Konfiguration der Steckstifte (22) und der Aufnahmesitze (26) symmetrisch ist.

4. Systemträger nach Anspruch 3, **dadurch gekennzeichnet, daß** die Konfiguration der Steckstifte (22) und der Aufnahmesitze (26) punktsymmetrisch ist, wodurch das Modul (12) durch Drehen um 180° in zwei unterschiedlichen Positionen mit dem Steckplatz (24) koppelbar ist.

5. Systemträger nach einem der vorhergehenden Ansprüche, **dadurch gekennzeichnet, daß** bei einer ersten Gruppe der Busse (private Busse) jeder Bus (28) jeweils zwei Steckplätze (24) direkt miteinander verbindet.

6. Systemträger nach einem der vorhergehenden Ansprüche, **dadurch gekennzeichnet, daß** mittels der zweiten Gruppe der Busse (lokale Busse 30) alle Steckplätze (24) untereinander verbunden werden.

7. Systemträger nach einem der vorhergehenden Ansprüche, **dadurch gekennzeichnet, daß** die dritte Gruppe der Busse (globale Busse 32) alle Steckplätze (24) untereinander verbindet und zusätzlich eine Verbindung zu einem weiteren Systemträger (10') herstellt.

8. Systemträger nach einem der vorhergehenden Ansprüche, **dadurch gekennzeichnet, daß** einzelne Busse (28, 30) mit einem Speicher (34) verbunden sind.

## Claims

1. System board for freely programmable gate arrays interconnected by busses, **characterized in that** the system board (10) carries at least three plug-in units (24) of identical configuration each of which in adapted to receive one module (12) carrying a freely programmable gate array (18), said module (12) being adapted to be connected to said plug-in unit (24) in variable positions, wherein said plug-in units (24) are firmly interconnected via three groups of busses (28, 30, 32).

2. System board according to claim 1, wherein each of said freely programmable gate arrays (FPGA 18) is firmly connected with a plate (20) having a plurality of pins (22) protruding from the lower surface of said plate (20) which are adapted to be inserted into corresponding seats (26) of said plug-in units (24).

3. System board according to claim 2, wherein said pins (22) and said seats (26) have symmetric configurations.

4. System board according to claim 3, wherein the pins (22) and the seats (26) have point-symmetric configurations such that the module (12) may be coupled with the plug-in unit (24) in two different positions turning it by 180°.

5. System board according to anyone of the preceding claims, wherein in a first group of busses (private busses) each bus (28) directly couples two plug-in units (24).

6. System board according to anyone of the preceding claims, wherein all plug-in units (24) may be interconnected by means of the second group of busses (local busses 30).

7. System according to anyone of the preceding claims, wherein the third group of busses (global busses 32) interconnects all plug-in units (24) and additionally makes a connection with a further system carrier (10').

8. System according to anyone of the preceding claims, wherein some of the busses (28, 30) are coupled to a memory (34).

## Revendications

1. Support de système pour portes logiques à programmation libre raccordées par des bus, **caractérisé par le fait que** sur ledit support (10) sont disposées au moins trois unités de plug-in (24) de configuration identique, chacune apte à recevoir un module (12) portant une porte logique (18) à programmation libre, ledit module étant apte à être relié à l'unité de plug-in (24) en positions variables, lesdites unités de plug-in (24) étant raccordées de manière fixe au moyen de trois groupes de bus (28, 30, 32).

2. Support de système selon la revendication 1, **caractérisé par le fait que** chaque porte logique (FPGA 18) à programmation libre est raccordée de manière fixe à une platine (20) portant des ergots (22) faisant saillie sur la face inférieure de ladite platine et enfichables dans des logements (26) correspondants sur les unités de plug-in (24).

3. Support de système selon la revendication 2, **caractérisé par le fait que** les configurations des ergots (22) et des logements (26) sont symétriques.

4. Support de système selon la revendication 3, **caractérisé par le fait que** les configurations des ergots (22) et des logements (26) sont à symétrie ponctuelle de sorte que le module (12) est apte à être relié à l'unité de plug-in (24) en deux positions diverses en le tournant de 180°

5. Support de système selon une des revendications précédentes, **caractérisé par le fait que** dans un premier groupe de bus (bus privés) chaque bus (28) raccorde directement deux unités de plug-in (24).

6. Support de système selon une des revendications précédentes, **caractérisé par le fait que** toutes les unités de plug-in (24) sont reliées les unes aux autres par le second groupe de bus (bus locaux 30).

7. Support de système selon une des revendications précédentes, **caractérisé par le fait que** toutes les unités de plug-in (24) sont reliées les unes aux autres par le troisième groupe de bus (bus globaux 30) lequel fait aussi un raccordement à un autre support de système (10').

8. Support de système selon une des revendications précédentes, **caractérisé par le fait que** quelques bus (28, 30) sont reliés à une mémoire (34).
